# EUROPEAN PATENT APPLICATION

(11) **EP 1 128 670 A2**
(43) Date of publication of application: **29.08.2001**
(21) Application number: 00127088.3
(22) Date of filing: 11.12.2000
(51) Int. Cl.: H04N 5/445

(54) **Program guide displaying apparatus and method**

(30) Priority: 23.02.2000 JP 2000052100
(71) Applicant: Pioneer Corporation, Meguro-ku, Tokyo (JP)
(72) Inventor: Inoue, Tatsu, c/o Pioneer Corp., Tokyo-to (JP)
(74) Representative: Viering, Jentschura & Partner

(57) **Abstract**

A program guide displaying apparatus (1) displays a program table, in which a plurality of program information are displayed in a 2-dimension of a time axis and a channel axis. The apparatus (1) is provided with: a program information obtaining device (3 to 7) for obtaining program information including information indicative of a program name, a genre name, a start time, a length of a program or an end time, a broadcasting channel and a broadcasting date of respective one of a plurality of programs; a genre specifying device (12, 13, 17) for specifying a genre among a plurality of genres; a displaying device (8, 9, 200) for displaying the program table such that the programs belonging to the specified genre are displayed in a first display manner, the programs other than the programs belonging to the specified genre are displayed in a second display manner different from the first display manner, and one program is displayed as a selected program among the programs belonging to the specified genre on the basis of the obtained program information; and a movement specifying device (12, 13, 17) for specifying a movement of the selected program in a time axis direction along the time axis or in a channel axis direction along the channel axis, on the displayed program table.

## Description

### BACKGROUND OF THE INVENTION

### 1. Field of the Invention

The present invention relates to an EPG (Electronic Program Guide).

### 2. Description of the Related Art

There is a digital broadcasting system, in which a digitized television signal is transmitted through a broadcasting satellite, a communicating satellite or the like, and is received by each home so that a user can view a television program. In such a system, since a plurality of channels can be reserved, it is possible to broadcast a large number of programs.

In the digital broadcasting system, information related to an EPG indicating the broadcasting contents of a large number of programs is transmitted from the satellite to each home together with video and audio information of the programs. At each home, the user operates a receiving apparatus so as to display the EPG on a TV (Television) set and search for his or her favorite program. Normally, in the display of the EPG, the user uses a remote control device attached to the receiving apparatus to search for the favorite program.

However, in this kind of digital broadcasting system, since more than 100 channels can be watched, it is a time and labor consuming job for the user to search for the favorite program from among the channels and select it. Thus, it is desired that the displayed EPG allows the user to easily search for his or her favorite program.

### SUMMARY OF THE INVENTION

It is therefore an object of the present invention to provide an apparatus for and a method of displaying a program guide, which enables a user to speedily search for his or her favorite program by a relatively simple operation.

The above object of the present invention can be achieved by a program guide displaying apparatus for displaying a program table, in which a plurality of program information are displayed in a 2-dimension of a time axis and a channel axis. The program guide displaying apparatus is provided with: a program information obtaining device for obtaining the program information including information indicative of a program name, a genre name, a start time, a length of a program or an end time, a broadcasting channel and a broadcasting date of respective one of a plurality of programs; a genre specifying device for specifying a genre among a plurality of genres; a displaying device for displaying the program table such that the programs belonging to the specified genre are displayed in a first display manner, the programs other than the programs belonging to the specified genre are displayed in a second display manner different from the first display manner, and one program is indicated as a selected program among the programs belonging to the specified genre on the basis of the obtained program information; and a movement specifying device for specifying a movement (i.e., a change in selection) of the selected program in a time axis direction along the time axis or in a channel axis direction along the channel axis, on the displayed program table. The displaying device indicates another program, which is the closest to the one program in the time axis direction on the displayed program table, as the selected program among the programs belonging to the specified genre and belonging to a channel same as that of the one program if the movement in the time axis direction is specified by the movement specifying device. The displaying device indicates another program, which is the closest to the one program in the channel axis direction on the displayed program table, as the selected program among the programs belonging to the specified genre, belonging to a channel different from that of the one program and having a predetermined time relationship with the one program if the movement in the channel axis direction is specified by the movement specifying device.

According to the program guide displaying apparatus of the present invention, the user specified one of the genres, which is his or her favorite genre. The program information as for a plurality of programs are displayed in the form of the program table in which the programs belonging to the specified genre are displayed in the first display manner while the programs other than the programs belonging to the specified genre are displayed in the second display manner different from the first display manner. Further, one program is displayed as a selected program among the programs belonging to the specified genre. When the movement of the selected program is specified by the user on the displayed program table, the selected program is moved in response to the specified movement. If the movement in the time axis direction is specified by the user, another program is selected as the selected program, which is the closest to the one program in the time axis direction on the displayed program table, among the programs belonging to the specified genre and belonging to the channel same as that of the one program. On the other hand, if the movement in the channel axis direction is specified by the user, another program is displayed as the selected program, which is the closest to the one program in the channel axis direction on the displayed program table, among the programs belonging to the specified genre, belonging to the channel different from that of the one program and having a predetermined time relationship with the one program. Accordingly, since the selected program is always the program belonging to the specified genre on the program table in which the programs belonging to the specified genre are displayed in a manner different from that for the rest of it, it is possible for the user to speedily find out the program belonging to his or her favorite genre.

In one aspect of the program guide displaying apparatus of the present invention, the programs on the program table displayed by the second display manner are less visible than those by the first display manner.

According to this aspect, since the programs belonging to the specified genre are displayed in the more visible manner (e.g., highlight-displayed or normally displayed), while the other programs are displayed in the less visible manner (e.g., normally displayed or subtle-colored-displayed), it is possible for the user to speedily find out the program belonging to his or her favorite genre.

In another aspect of the program guide displaying apparatus of the present invention, the displaying device displays a cursor on the selected program.

According to this aspect, since the selected program is indicated by the cursor, it is possible for the user to speedily find out the program belonging to his or her favorite genre.

In another aspect of the program guide displaying apparatus of the present invention, the displaying device changes a position of the selected program only within a predetermined movable range in the channel axis direction and the time axis direction.

According to this aspect, since the selected program is always within the predetermined movable range, it is possible to prevent the user from being confused, who views the program table, due to a large movement of the selected program at one time.

In this aspect, if there does not exist another program as the selected program within the predetermined movable range, the displaying device may continue to display the one program as the selected program.

By constituting in this manner, since the selected program is not changed, it is possible for the user to specify the movement of the selected program in a different direction.

Alternatively in this aspect, if there does not exist another program as the selected program within the predetermined movable range, the displaying device may display a message indicating that there does not exist another program within the predetermined movable range.

By constituting in this manner, it is possible for the user to easily recognize a fact that there does not exist another program within the predetermined movable range, in case of the specified movement of the selected program.

Further alternatively in this aspect, if there does not exist another program as the selected program within the predetermined movable range, the displaying device displays another program which is located at an edge of the predetermined movable range.

By constituting in this manner, even if the program belonging to the specified genre cannot be found out within the predetermined movable range, it is possible for the user to again specify the movement in the same direction and search for the program belonging to the specified genre and possibly existing in that direction one after another.

The above object of the present invention can be also achieved by a program guide displaying method of displaying a program table, in which a plurality of program information are displayed in a 2-dimension of a time axis and a channel axis. The program guide displaying method is provided with: a program information obtaining process of obtaining the program information including information indicative of a program name, a genre name, a start time, a length of a program or an end time, a broadcasting channel and a broadcasting date of respective one of a plurality of programs; a genre specifying process of specifying a genre among a plurality of genres; a displaying process of displaying the program table such that the programs belonging to the specified genre are displayed in a first display manner, the programs other than the programs belonging to the specified genre are displayed in a second display manner different from the first display manner, and one program is displayed as a selected program among the programs belonging to the specified genre on the basis of the obtained program information; and a movement specifying process of specifying a movement of the selected program in a time axis direction along the time axis or in a channel axis direction along the channel axis, on the displayed program table. The displaying process displays another program, which is the closest to the one program in the time axis direction on the displayed program table, as the selected program among the programs belonging to the specified genre and belonging to a channel same as that of the one program if the movement in the time axis direction is specified by the movement specifying process. The displaying process displays another program, which is the closest to the one program in the channel axis direction on the displayed program table, as the selected program among the programs belonging to the specified genre, belonging to a channel different from that of the one program and having a predetermined time relationship with the one program if the movement in the channel axis direction is specified by the movement specifying process.

According to the program guide displaying method of the present invention, the user specified one of the genres, which is his or her favorite genre. The program information as for a plurality of programs are displayed in the form of the program table in which the programs belonging to the specified genre are displayed in the first display manner while the programs other than the programs belonging to the specified genre are displayed in the second display manner different from the first display manner. Further, one program is displayed as a selected program among the programs belonging to the specified genre. When the movement of the selected program is specified by the user on the displayed program table, the selected program is moved in response to the specified movement. If the movement in the time axis direction is specified by the user, another program is selected as the selected program, which is the closest to the one program in the time axis direction on the displayed program table, among the programs belonging to the specified genre and belonging to the channel same as that of the one program. On the other hand, if the movement in the channel axis direction is specified by the user, another program is displayed as the selected program, which is the closest to the one program in the channel axis direction on the displayed program table, among the programs belonging to the specified genre, belonging to the channel different from that of the one program and having a predetermined time relationship with the one program. Accordingly, since the selected program is always the program belonging to the specified genre on the program table in which the programs belonging to the specified genre are displayed in a manner different from that for the rest of it, it is possible for the user to speedily find out the program belonging to his or her favorite genre.

In one aspect of the program guide displaying method of the present invention, the programs on the program table displayed by the second display manner are less visible that those by the first display manner.

According to this aspect, since the programs belonging to the specified genre are displayed in the more visible manner (e.g., highlight-displayed or normally displayed), while the other programs are displayed in the less visible manner (e.g., normally displayed or subtle-colored-displayed), it is possible for the user to speedily find out the program belonging to his or her favorite genre.

In another aspect of the program guide displaying method of the present invention, the displaying process displays a cursor on the selected program.

According to this aspect, since the selected program is indicated by the cursor, it is possible for the user to speedily find out the program belonging to his or her favorite genre.

In another aspect of the program guide displaying method of the present invention, the displaying process changes a position of the selected program only within a predetermined movable range in the channel axis direction and the time axis direction.

According to this aspect, since the selected program is always within the predetermined movable range, it is possible to prevent the user from being confused, who views the program table, due to a large movement of the selected program at one time.

In this aspect, if there does not exist another program as the selected program within the predetermined movable range, the displaying process may continue to display the one program as the selected program.

By constituting in this manner, since the selected program is not changed, it is possible for the user to specify the movement of the selected program in a different direction.

Alternatively in this aspect, if there does not exist another program as the selected program within the predetermined movable range, the displaying process may display a message indicating that there does not exist another program within the predetermined movable range.

By constituting in this manner, it is possible for the user to easily recognize a fact that there does not exist another program within the predetermined movable range, in case of the specified movement of the selected program.

Further alternatively in this aspect, if there does not exist another program as the selected program within the predetermined movable range, the displaying process may display another program which is located at an edge of the predetermined movable range.

By constituting in this manner, even if the program belonging to the specified genre cannot be found out within the predetermined movable range, it is possible for the user to again specify the movement in the same direction and search for the program belonging to the specified genre and possibly existing in that direction one after another.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a block diagram showing a structure of a satellite digital broadcast receiving apparatus as an embodiment of the present invention;
FIG. 2 is a diagram showing a method of transmitting data in a digital broadcast in the embodiment;
FIG. 3 is a plan view of a picture plane showing one example of an EPG display in the embodiment;
FIG. 4 is a diagram schematically showing a concept of a structure of EPG display data in the embodiment;
FIG. 5 is a front view of a remote controller used with the receiving apparatus of FIG. 1 in the embodiment;
FIG. 6 is a diagram showing one example of an EPG display in a genre skip mode in the embodiment;
FIG. 7 is a diagram showing another example of the EPG display in the genre skip mode in the embodiment;
FIG. 8 is one diagram for explaining a movement of a cursor in the genre skip mode in the embodiment;
FIG. 9 is another diagram for explaining the movement of the cursor in the genre skip mode in the embodiment;
FIG. 10 is a flowchart showing an EPG display process in the embodiment;
FIG. 11 is a flowchart showing one process of the genre skip mode (i.e., a first processing method) in the embodiment; and
FIG. 12 is a flowchart showing another process of the genre skip mode (i.e., a second processing method) in the embodiment;

### DETAILED DESCRIPTION OF THE PREFERRED EMBODIMENTS

Referring to the accompanying drawings, embodiments of the present invention will be now explained.

### (I) Structure of Receiving Apparatus

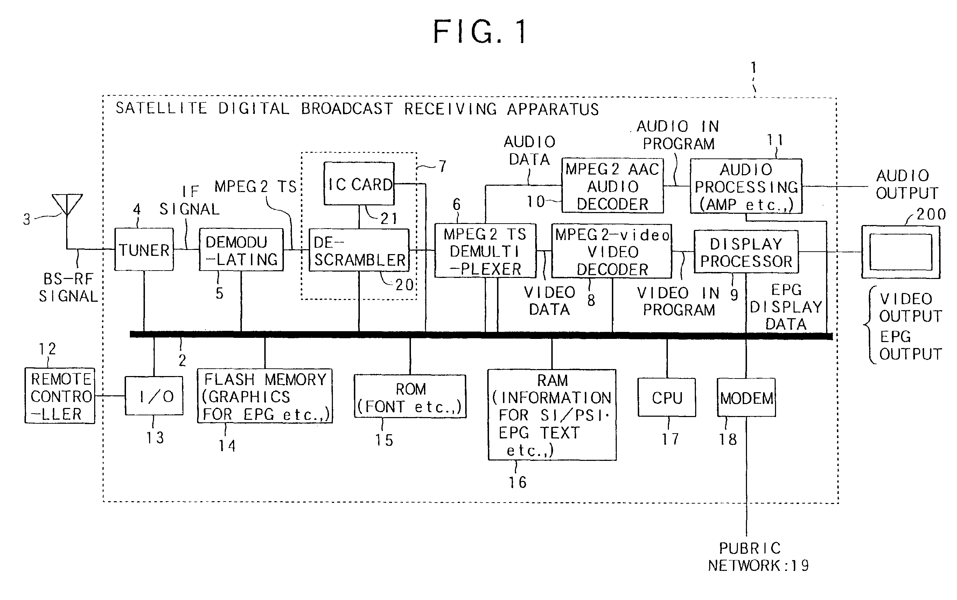

FIG. 1 shows a structure of a satellite digital broadcast receiving apparatus as an embodiment of the present invention. A satellite digital broadcast receiving apparatus 1 shown in FIG. 1 is equipped in each home of a viewer or user, receives a digital broadcast signal (i.e., a broadcast wave) from a satellite and displays a television (TV) program corresponding to it on a picture plane of the television (TV) set at home. Further, the receiving apparatus 1 receives information related to the EPG transmitted from the satellite simultaneously with the digital broadcast signal, and display it on the picture plane of the television set in response to an instruction of the viewer.

As shown in FIG. 1, the receiving apparatus 1 has a structure in which various constitutional elements are connected to a communication bus 2. The receiving apparatus 1 is operative by an attached remote controller 12.

A broadcast wave transmitted from a satellite (i.e., a BS·RF signal) is received by an antenna 3 and is transmitted to a tuner 4 within the receiving apparatus 1. This broadcast wave includes video and audio information of a TV program (which is referred to as "TV program information", hereinafter), as well as the information to be used for displaying the EPG (which is referred to "SI (Service Information)" hereinafter). The tuner 4 is tuned to a receiving band selected by the user, converts the received signal wave to an IF (Intermediate Frequency) signal, and sends it to a demodulating unit 5. The demodulating unit 5 demodulates the inputted digital signal, applies predetermined signal processes such as a re-construction of data frames, an error correcting process and so forth, and supplies it through a de-scrambler 20 to a demultiplexer 6 in a format of a transport stream (which is referred to as a "TS" hereinafter) of the MPEG 2.

The demultiplexer 6 extracts the audio data and video data corresponding to the selected service from among the inputted TS of the MPEG 2, and supplies them to an audio decoder 10 and a video decoder 8 respectively. Here, the audio data is in the format of MPEG 2-AAC, while the video data is in the format of MPEG 2 -Video. The audio decoder 10 decodes the inputted audio data to generate "program audio data" and supplies it to an audio processing unit 11. The audio processing unit 11 includes an amplifier and applies a predetermined audio signal process onto this program audio data, to thereby generate an audio output.

On the other hand, the video decoder 8 decodes the inputted video data to generate "program video data" and supplies it to a display processor 9. The display processor 9 applies a predetermined process onto this program video data, to thereby output a video output to a TV display device 200. Further, the display processor 9 has a function of superimposing character information on the program video image displayed on the picture plane of the TV displaying device 200. The EPG display data described later in detail is superimposed on the program video data by the display processor 9 and is outputted such that the program video data is partially replaced by the EPG display data, to be thereby displayed on the TV displaying device 200.

The demultiplexer 6 extracts control data including the SI out of the TS in the inputted MPEG 2. The SI is the origin of the EPG display data. The EPG displaying process is performed by using this SI. The control data including the SI extracted by the demultiplexer 6 is stored into a RAM 16 under the control of a CPU 17. Also in the RAM 16, EPG text data to perform the EPG display is stored. A flash memory 14 stores various graphic data to perform the EPG display (e.g., a frame of a program table, a predetermined mark such as a logo mark of each broadcast channel). A ROM 15 stores font data used as the EPG text data and the like.

A limited reception processing unit 7 including the de-scrambler 20 performs a following process. Namely, the limited reception broadcasting of a prior contract (or a prior agreement) type is done by a service unit or a program unit, so that the TS of the relevant MPEG 2 is scrambled (or enciphered) and is then transmitted. The limited reception processing unit 7 consists of the de-scrambler 20, as a de-scramble or decipher processing unit, and an IC card 21 for storing contract information and judging the limitation or allowance of viewing for each user. The IC card 21 is distributed to each user of the receiving apparatus from a service center commonly owned by broadcasting providers. On the IC card 21, the user contract information is described in correspondence with a contract condition between the user and each broadcasting provider. In general, the described content of the IC card 21 is different between the respective users. In case that the user selects the limited broadcast program, the limited reception processing unit 7 uses both of the user contract information stored in the IC card 21 and the de-scrambling related information obtained from the broadcast wave, and thereby performs the de-scrambling process for the TS in the MPEG 2 if the user has a contract for the pertinent service or program. Thus, the user can view this program. On the other hand, if the user does not have such a contract, the de-scrambling process for the TS in the MPEG 2 is not performed, so that the user cannot view this limited reception broadcast program.

Further, in case of the "pay per view program", each time when the user purchases the program, the purchase condition is described into the IC card 21. Then, the pay per view program purchasing information is transmitted from the side of the receiving apparatus 1 to the side of the broadcast provider through the modem 18 and the public network 19 in a predetermined cycle.

The instruction inputted by the user using the remote controller 12 is transmitted through the interface (I/O) 13 to the CPU 17 and is recognized there. The CPU 17 controls the respective constitutional elements within the receiving apparatus 1 in accordance with the instruction given by the user. For example, the instruction to tune a frequency of the channel specified by the user is transmitted to the tuner 4.

In case of the EPG display, the CPU 17 generates the EPG text data from the SI stored in the RAM 16 as the source. Next, the CPU 17 generates the EPG display data by using the graphic data such as the frame data for the TV program table stored in the flash memory 14, the font data stored in the ROM 15 as well as the EPG text data, and then supplies it to the display processor 9. The display processor 9 switches the program video data from the video decoder 8 and the EPG display data to each other, on the basis of the switching instruction from the CPU 17, so as to superimpose the EPG display data on the program data and then output it as the video signal to the TV displaying device 200.

To the communication bus 2, the public network 19 is connected via the modem 18, so as to connect the receiving apparatus 1 with a telephone, a personal computer or the like of the user and thereby perform a necessary communication between the broadcasting station and the home of the viewer.

### (II) Signal Format

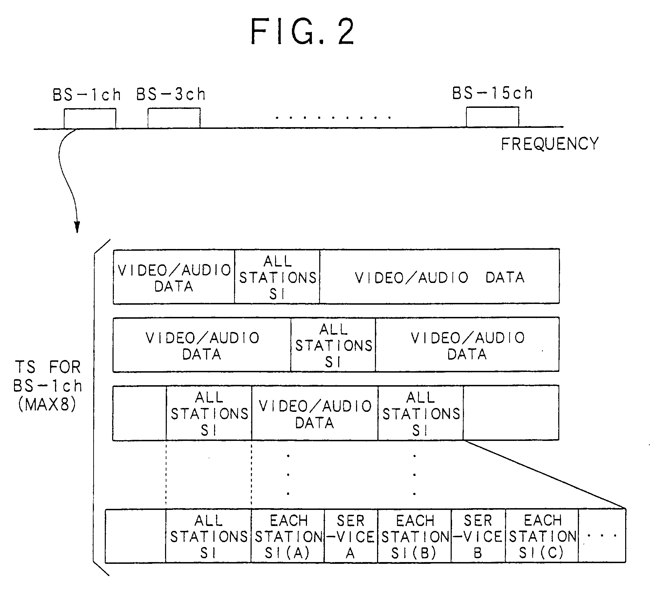

Next, a digital signal is explained, which is transmitted from a satellite as the data, which becomes the source of the EPG display data. FIG. 2 schematically shows a data format of the digital signal. As shown in FIG. 2, in the satellite digital broadcasting system, a plurality of BS channels (bands) are set so that it is possible to transmit 8 TSs in the MPEG 2 at the maximum for each BS channel. Further, it is possible to transmit 32 services at the maximum by one TS. In the following explanation, the frequency band in the satellite broadcast is called as a "BS channel", and is differentiated from the channel for each broadcast program, which is received by the receiving apparatus 1.

In each TS, an all stations SI is multiplexed in the information such as the video information and the audio information. The all stations SI is the SI for all the broadcasting stations, and includes the TV program arrangement information for all the channels. Namely, the all stations SI having the same content is multiplexed on all the TSs of all the BS channels and is then transmitted. By this, even if the channel is received by the user from any one of the broadcasting stations, it is possible to generate the EPG data for all the channels by obtaining the all stations SI included in the TS in this received channel. More concretely, the CPU 17 shown in FIG. 1 obtains the all stations SI from the TS, which is currently being received, by controlling the demultiplexer 6, to thereby constitute the EPG text data on the basis of the obtained all stations SI.

The lower portion of FIG.2 shows the format of the video and audio data in each TS. It has been explained such that the 32 services at the maximum can be transmitted for each TS. These services are time-division-multiplexed in the form of packets within one TS. In the example shown in FIG. 2, the services of the broadcasting stations (e.g., the service A, the service B, ...) are time-division-multiplexed in the TS positioned at the lowest in the figure. Therefore, in order to receive the service A for example, the CPU 17 firstly controls the tuner 4 shown in FIG. 1 to tune the BS channel which includes the TS. Then, the demodulating unit 5 identifies and extracts the TS of the target from among a plurality of TSs included in the BS channel. Then, the demultiplexer 6 extracts the service A, which is time-division-multiplexed in the TS, with referring to the identification information of the service A.

Here, as shown in FIG. 2, at the head of data of each service station (which is indicated by the service A, the service B, ...), the "each station SI" is inserted. The each station SI is the information similar to that of the all stations SI, but includes the information dedicated to respective one of the stations, which is not included in the all stations SI. Namely, the all stations SI includes the information necessary to display the program table as for all the channels as the EPG while the each station SI includes the more detailed information such as the summary of each program. Therefore, the CPU 17 in FIG. 1 obtains the each station SI in response to the instruction of the user, so that the summary information as for a specific channel can be displayed.

### (III) EPG Display Picture Plane

Next, the EPG display picture plane according to the present invention is explained.

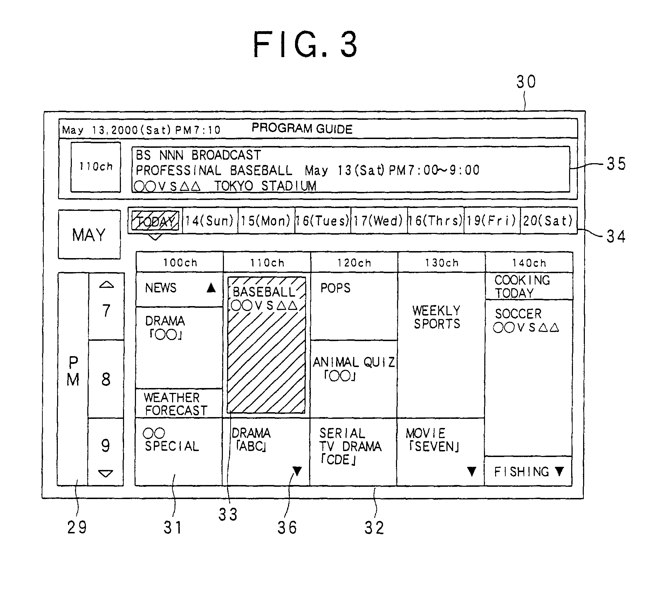

The EPG display picture plane shown in FIG. 3 shows a TV program table of a plurality of channels for each day-of-week, which is referred to as a "day-of-week EPG" in the present invention. As a display aspect of the EPG other than this day-of-week EPG, there is a "genre EPG" which shows the TV programs for each genre. The EPG display picture plane may be displayed large over the whole picture plane of the TV display or may be displayed small such that it is superimposed in the video image of the TV program which is being viewed.

At the top field of a day-of-week EPG 30, the present date and time is displayed. The day-of-week EPG 30 has a TV program table for eight days from the present day to the day next week, which corresponds to the same day-of-week as the present day as shown in FIG. 3. The TV program table is prepared for all the channels for each day-of-week. If one of the days is specified by the user by using a day-of-week tab 34, the TV program table on the specified day is displayed. Each time when a "day-of-week changing key" 47 of the remote controller 12 as described later is pressed once, the TV program table is changed to one for the next day, so that it returns to the TV program table today after it is changed to the TV program table 7 days ahead of today.

The TV program table is shown in a TV program table display area 32. Each unit divided by the frame is called as a TV program cell 31. On the left side of the TV program table display area 32, there is a time band display area 29. The example of FIG. 3 shows the TV program table having the time band from PM 7:00 to PM 10:00 on May 13^{th}(Sat), 2000. At the upper field of the TV program table display area 32, the TV channels arranged in the lateral direction is shown.

The portion indicated by a cursor 33 (in FIG. 3, which is indicated as a black frame) indicates the program, which is currently selected by the user. In the example of FIG. 3, the program of professional "baseball ○○VSΔΔ" is selected. The summary information as for the program which is currently selected is displayed within a summary information field 35 at the upper portion of FIG. 3. This summary information is generated from the all stations SI in each TS described before, as the source.

By moving the cursor 33 in the left and right direction in FIG. 3 by operating the remote controller 12, it is possible for the user to select the TV channel. Also, the change in the time axis direction of the currently displayed TV program table is done by moving the cursor 33 in the up and down direction by the remote controller 12. Those operations will be described later in detail. If the cursor 33 is continuously moved in the time axis direction to pass through the PM 12:00, the day-of-week of the TV program table is automatically changed to the next day, so that the cursor 33 is in a condition to select the program cell after AM 00: 00 on the next day. Further, if the cursor 33 is continuously moved to pass through PM 12:00 7 days after ahead of today (e.g., pass through PM 12:00 on 20^{th} (Sat) in the example of FIG. 3), the day-of-week of the TV program table returns to "today", and then the cursor 33 is set in a condition to select the program cell after AM 00:00 today. However, if there is no TV program information in the past, the cursor 33 is set in a condition to select the program cell after the time band for which the program information exists.

In the example of FIG. 3, the program table having a length indicative of 3 hours in the time axis direction and a length indicative of 5 channels in the channel axis direction is shown. However, the present invention is not limited to this. For example, channels in the greater number than 5 may be simultaneously displayed.

Within a certain program cell 31, a continuation mark 36 is displayed. The continuation mark 36 indicates that the TV program appended with the continuation mark 36 continues in the time axis direction indicated by the continuation mark 36 since the broadcasting time duration of the TV program is too long to be displayed within the TV program table display area 32. For example, although the movie "seven" is a two hours program starting from PM 9:00 at the channel 130 in FIG. 3 (hereinafter, the channel N is referred to simply as the "Nch"), the whole of this program cannot be displayed since the time band is limited until PM 10:00. Accordingly, the fact that this program continues after PM 10:00 is indicated by the continuation mark 36. Incidentally, the continuation mark 36, which is directed upward (i.e., ▲ in the figure), indicates that the time band of the program continues in the up direction (i.e., in the direction of earlier in time). On the other hand, the continuation mark 36, which is directed downward (i.e., ▼ in the figure), indicates the time band of the program continues in the down direction (i.e., in the direction of later in time).

The width along the time axis of a short time program (such as a weather forecast, a news or the like) for 3 to 5 minutes may be too short to display the character or text indicating the title of the TV program in the EPG display. In such a case, only the program cell may be shown in the EPG display, so that the content of the short program is shown in the summary information field 35 when the user selects such a short program cell. By this, the user can check the content of such a short time program.

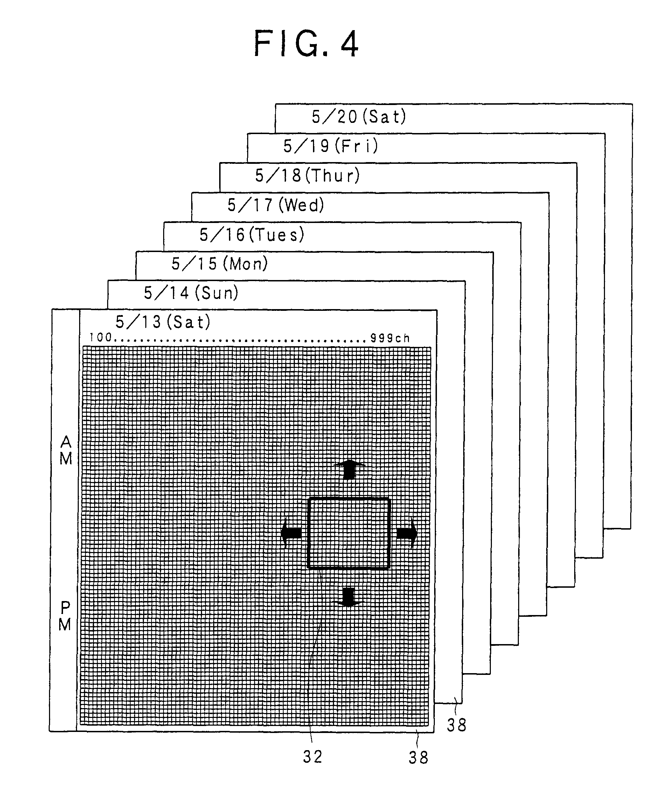

FIG. 4 is a diagram schematically showing the data structure of the day-of-week EPG. As described above, in the day-of-week EPG, the TV program tables for eight days from today to the same day-of-week next week are displayed for each day. Namely, it may be considered such that one TV program table for all channels for each day-of-week is one sheet of a day-of-week EPG sheet 38 and that such a day-of-week EPG 38 is prepared for each day from today until 7 days ahead. Therefore, if the user specifies "today" in the day-of-week tab 34 in FIG. 3, the program table for today is displayed as shown in FIG. 3. If the user specifies "14 (Sun)" in the day-of-week tab 34 in FIG. 3, the program table for May 14^{th}, 2000 (which is tomorrow) is displayed.

The portion displayed as the day-of-week EPG 30 as shown in FIG. 4 is only a portion of one sheet of the day-of-week sheet 38. The display example of FIG. 3 is an example of the day-of-week EPG at PM 07:00 on May 13^{th} (Sat), so that the TV program table from 100ch to 140ch in the time band from PM 07:00 to PM 10:00 is shown. Here, if the user operates the remote controller 12 so as to move the cursor 33 out of the currently displayed range, the program display area 32 shown in FIG. 4 is moved. As a result, one or both of the time band and the channel band of the day-of-week EPG 30 to be displayed is or are changed.

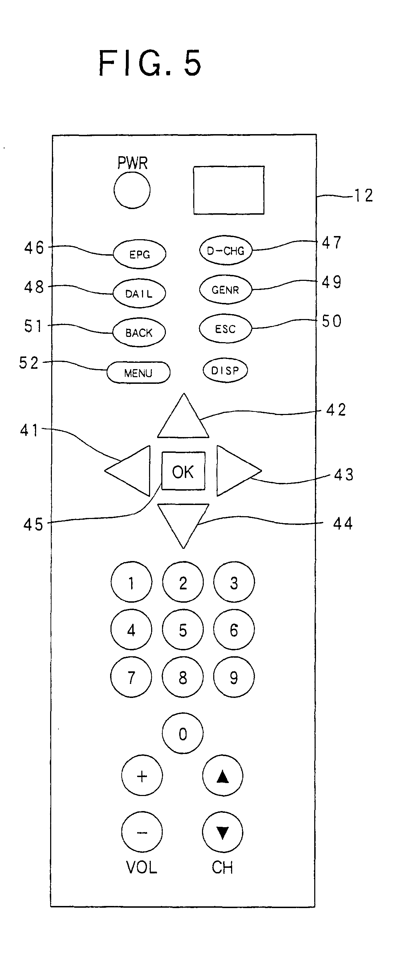

FIG. 5 shows an appearance of the remote controller 12, which is used together with the receiving apparatus 1 of the present invention. Among function keys provided on the upper portion of the remote controller 12, an EPG key 46 is a key to display the EPG picture plane as shown in FIG. 3. Namely, under a condition that a normal program is viewed, if the EPG key 46 is pressed, the picture plane of the TV display is changed from the normal program picture plane to the EPG picture plane as shown in FIG. 3. It is also possible to superimpose such an EPG picture plane on the normal program picture plane. Further, if the EPG key 46 is pressed under a condition that the EPG picture plane is displayed, it is changed back to the original program picture plane. A "day-of-week" ("DAIL") key 48 is located below the EPG key 46, and is to display the day-of-week EPG as shown in FIG. 3. Other than the day-of-week EPG picture plane, there is the genre EPG picture plane as another kind of the EPG picture plane. The day-of-week key 48 is to issue an instruction to select the day-of-week EPG among those various kinds of EPG picture planes.

A "day-of-week changing" ("D-CHG") key 47 is located at a right side of the EPG key 46, and is used to change the day-of-week of the program table in the display. Further, a "genre" ("GENR") key 49 is located below the day-of-week changing key 47, and is to change the EPG picture plane to the genre EPG. An ESC key 50 is located below the genre key 49, and is used to change from the EPG picture plane back to the normal program picture plane. A BACK key 51 is used to cancel an instruction inputted beforehand and returns to the condition before this instruction is inputted.

A "menu" key 52 is located below the BACK key 51, and is used to select one of various functions of the receiving apparatus. In case that the "genre skip mode", which will be described later in detail is to be initiated, selectable candidates of various modes are displayed on the TV display by pressing the menu key 52, and the "genre skip mode" is selected from among them.

Cursor movement keys (keys 41 to 44) are disposed at a substantial center of the remote controller 12, and are used to move a position of the cursor 33 in FIG. 3. Under a condition of the display as shown in FIG. 3, if a leftward key 41 is pressed, the cursor moves leftward to an adjacent program cell, while the cursor 33 moves rightward to an adjacent program cell if a rightward key 43 is pressed. Further, if an upward key 42 is pressed, the cursor moves upward to an adjacent program cell, while the cursor 33 moves downward to an adjacent program cell if a downward key 44 is pressed.

Under a condition that the cursor 33 is just moved by the keys 41 to 44, the selection of the program is not yet confirmed on the processes of the receiving apparatus 1. After the cursor 33 is moved, the selection of the program is confirmed by pressing the confirmation ("OK") key 45. For example, under a condition shown in FIG. 3, the receiving apparatus 1 is receiving the program "baseball ○○VSΔΔ" at 110ch. Here, if the user presses the rightward key 43, the cursor 33 is moved rightward to the program cell of "pops", which is on the right side within the TV program table display area 32. However, the program, which the receiving apparatus 1 is presently receiving, is still the "baseball ○○VSΔΔ". After that, if the user presses the decision key 45, the receiving apparatus 1 changes the reception channel from 110ch to 120ch, so that the reception of the program "pops" is started and the received image of this program "pops" is displayed.

In addition, the keys 41 to 44 for moving the cursor may be used to specify the moving direction of the cursor in the later described genre skip mode.

In case that the program cell, which is ahead (in the future) of the present time, is specified by the keys 41 to 44 and the decision key 45, the reservation picture plane for the TV program corresponding to this specified program cell is normally displayed. By performing an operation instructed by the reservation picture plane, it is possible for the user to view or make a reservation of this TV program. Also, in case that the past TV program information is to be erased by sequentially updating the SI, if the program cell in the past is specified, such a message may be displayed that the TV program corresponding to this specified program has already been broadcasted.

Incidentally, the other keys of the remote controller 12 shown in FIG. 5 are related to the normal reception of the TV program, and they are not directly related to the present invention. Thus, the explanations thereof are omitted.

### (IV) Genre Skip Mode

Next, the genre skip mode, which is one of important features of the present invention will be explained. The "genre skip mode" is such a mode that the user can select a program only among the programs belonging to the user's favorite genre or genres. Here, the "genre" is such a category that a plurality of programs, e.g., a sport, a news, a report, a movie, an education and so on are categorized in accordance with the type and/or the content of the respective programs. The EPG data includes information indicating to which genre each program belongs, as the attribute data of each program.

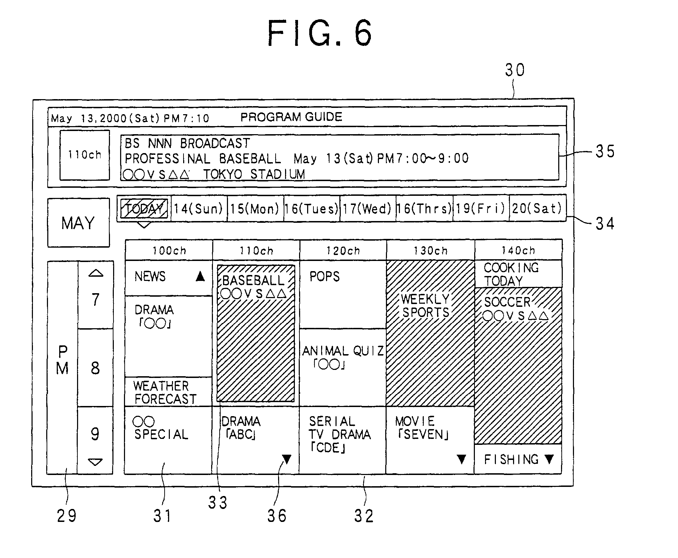

Before entering the genre skip mode, the user specifies a user's favorite genre in advance (which is simply referred to as a "favorite genre", hereinafter). Such a specified favorite genre is stored in the RAM 16 shown in FIG. 1 for example. Under a condition that the day-of-week EPG is displayed on the TV display as shown in FIG. 3, if the user operates the menu key 52 of the remote controller 12 etc., (refer to FIG. 5) so as to enter the genre skip mode, the day-of-week picture plane in FIG. 3 is changed to a display picture plane as shown in FIG. 6.

FIG. 6 shows an example of the EPG picture plane in the genre skip mode. Here, it is assumed that the "sport" genre is set as the favorite genre, which is specified in advance by the user. In the display picture plane shown in FIG. 6, only the programs belonging to the "sport" genre are normally displayed or highlight-displayed so that only these programs can be easily viewed, while other programs are masked to be subtle-colored. Thus, since only the programs belonging to the favorite genre are outstandingly displayed, the user can easily recognize the programs belonging to his or favorite genre.

Then, in the genre skip mode, as for the process of moving the cursor 33, the programs other than the program or programs of the favorite genre are ignored. Namely, the cursor 33 always moves only on the programs of the favorite genre. In the genre skip mode, the cursor 33 is moved basically by using a following method.

If an instruction of moving the cursor 33 in the time axis direction (i.e., the up and down direction) is inputted through the cursor movement key (e.g., the upward key 42 or the downward key 44 in FIG. 5), the cursor 33 is moved onto the program of the same genre, which belongs to the same channel and is the closest in this instructed direction. On the other hand, if an instruction of moving the cursor 33 in the channel axis direction (i.e., the left and right direction) is inputted through the cursor movement key (e.g., the leftward key 41 and the rightward key 43 in FIG. 5), the cursor 33 is moved onto the program of the same genre, which belongs to the different channel and is the closest among the programs of the same genre having a predetermined time relationship with the program, which is displayed as the selected program at the time of instructing the movement, with respect to the instructed direction. Here, this "predetermined time relationship" implies a time relationship, which can be grasped as the substantially same time band, for example, within one hour or two hours. More concretely, this feature is easily understood, if the display time band of the program table is fixed, and if the cursor 33 is moved within the range of the displayed time band.

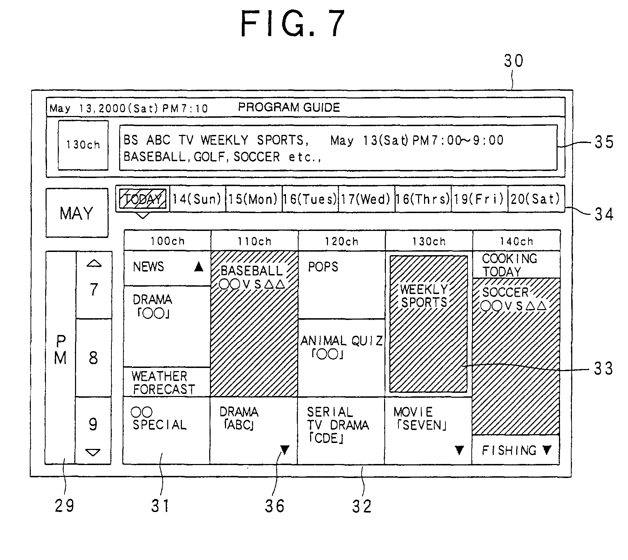

For example, if the rightward key 43 for moving the cursor 33 (refer to FIG. 5) is pressed by the user under the condition shown in FIG. 6, the cursor 33 is moved from the "baseball ○○VSΔΔ" to the "weekly sports" belonging to the same "sport" genre as shown in FIG. 7. In case of the normal mode, if the rightward key 43 for moving the cursor 33 is pressed under the condition shown in FIG. 6, the cursor 33 is moved to the "pops". In contrast, in case of the genre skip mode, since the programs other than the program or programs of the favorite genre (which is the "sport" genre in this example) are ignored, the cursor 33 is moved to the program cell of the "weekly sports", which belongs to the "sport" genre and is the closest in the right direction.

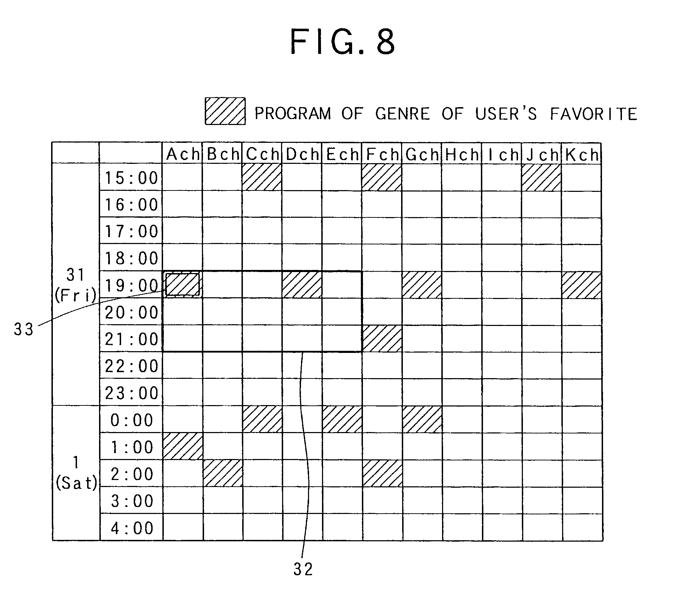

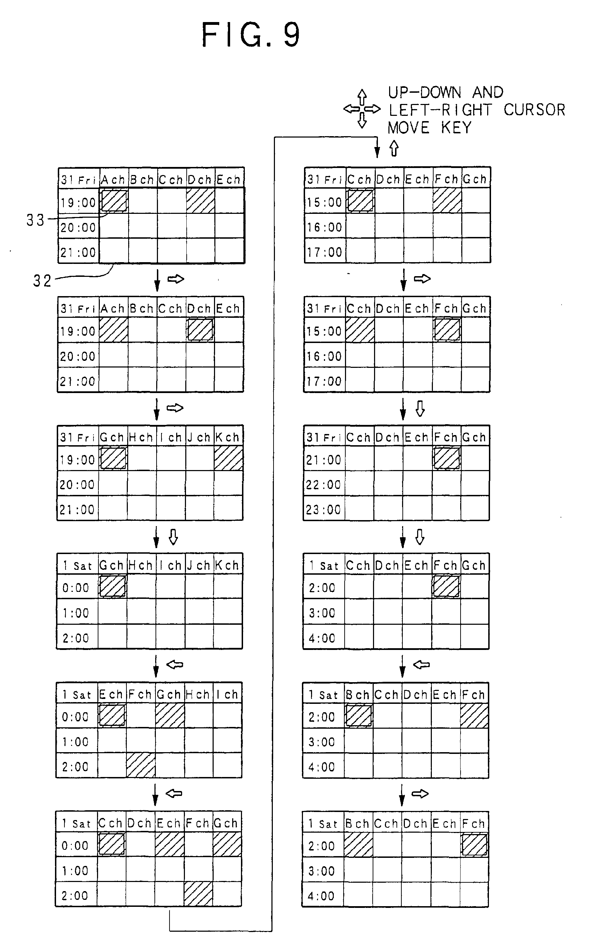

FIG. 8 and FIG. 9 show one example of the movement of the cursor 33 in the genre skip mode. Now, it is assumed that there exists the program table data as shown in FIG. 8. This program table data is shown as for a certain time band and a certain channel band of the EPG data image in two days shown in FIG. 4, and it is assumed that each program is one hour program for the sake of simplicity of the explanation. With respect to the program table data of FIG. 8 as a premise, if the cursor 33 is positioned at the program cell of 31^{st}, 19: 00 and Ach as shown in a left upper portion of FIG. 9 and if the key for moving the cursor in the right direction is pressed, the cursor 33 is moved to the program cell of 31^{st}, 19:00 and Dch, which corresponds to the program of the same genre at the different channel, and is the closest in the instructed direction. Further, if the key for moving the cursor in the right direction is pressed, the cursor is moved to the program cell of 31^{st}, 19:00 and Gch. FIG. 9 shows a manner that the cursor 33 is moved, in case that the cursor 33 is moved in the direction indicated by an arrow in the above explained way.

Here, regardless of the left and right moving direction or the up and down direction, if there exists the program of the cursor moving destination within the display range, the display range is not changed. On the other hand, if there does not exist the program of the cursor moving destination within the display range, the display range is moved in parallel so that the program of the cursor moving destination is positioned at the upper edge or the left edge of the new display range, to thereby display the program table. However, the present invention is not limited to this. For example, the program table may be displayed so that the program of the cursor moving destination is always positioned at the center of the display range.

In this manner, in the genre skip mode, since the programs of the genres other than the favorite genre are displayed in the subtle color, it is possible for the user to speedily find out the program of the favorite genre. Further, in case that the user searches for the program to be viewed by moving the cursor 33, since the cursor 33 moves only on the programs of the favorite genre, it is possible for the user to speedily view the programs of the favorite genre on the TV program table over a wide range thereof.

There may be a case that the moving amount of the cursor 33 is too much for the user to easily view the program table depending upon the content of the program table. As mentioned before, the EPG typically includes the program table for 100 channels. Thus, in case that the number of the programs belonging to the favorite genre is not so large and that they are significantly separated from each other on the program table, the cursor 33 may move over a several tens of channels at one time, resulting in that the user viewing the program table is confused by such a large movement of the cursor 33. In view of this, the moving amount of the cursor 33 for moving at one time is limited in the genre skip mode according to the present invention.

The range for which the cursor can be moved at one time (hereinafter, which is occasionally referred to as a "cursor movable range") may be determined on the basis of various standards. The cursor movable range may be 10 channels in the channel axis direction and 10 hours in the time axis direction for example, although it depends on the size of the program table displayed in the normal mode. According to this, the cursor 33 cannot be moved from one program cell to another program cell, which is separated from the one program cell for 10 channels or for 10 hours on the program table, by the cursor movement in response to one instruction to move the cursor 33.

There may be two methods of displaying the EPG picture plane in case that the program cell of the favorite genre cannot be found out in the cursor movable range. The first method is a method of maintaining the picture plane before the key for moving the cursor 33 is operated. Namely, even if the movement of the cursor 33 is instructed by the user, if the program cell of the favorite genre does not exist in the cursor movable range toward the instructed direction, the program table on the display picture plane is not changed. In this case, it is possible to display such a message to the user that "No program of your favorite genre is found within the cursor movable range". The second method is a method of moving the cursor by the maximum moving amount within the cursor movable range. Namely, if the user instructs the cursor movement in the right direction and if the program cell of the favorite genre does not exist in the cursor movable range (e.g., 10 channels in the above mentioned example), the cursor is moved for 10 channels amount. The first or second method may be set on the manufacturing side of the receiving apparatus or may be selected and set on the user side, as his preferable method.

### (V) EPG Display Process

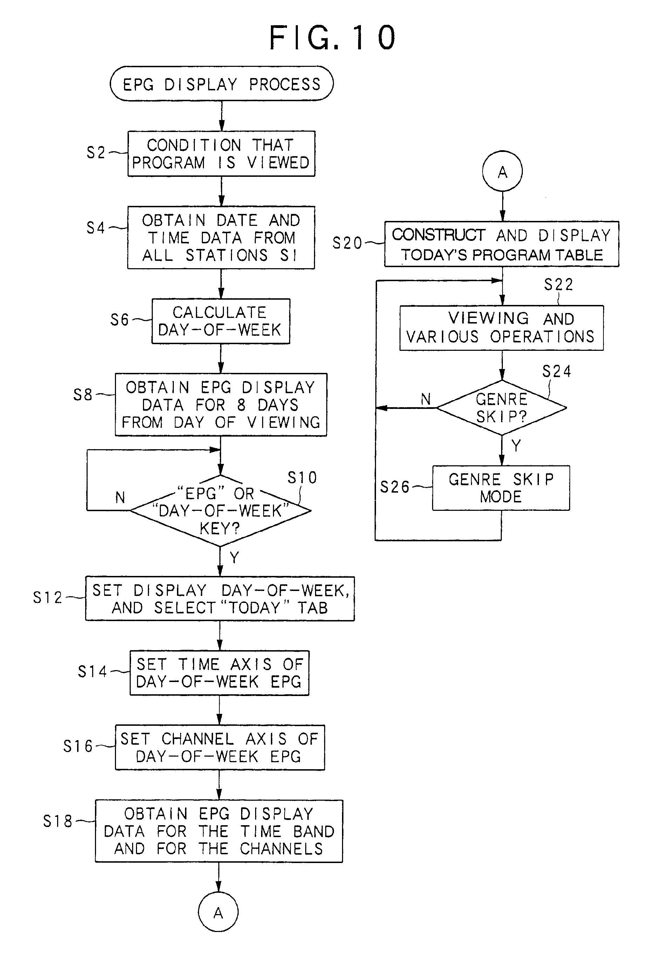

Next, the EPG display process is explained with reference to flowcharts of FIG. 10 to FIG. 12. The processes explained hereinafter are mainly performed as the CPU 17 shown in FIG. 1 executes a predetermined process program stored in the ROM 15, to thereby control the RAM 16, the display processor 9 and so on.

Now, the receiving apparatus 1 is assumed in such a condition that user operates the receiving apparatus 1 to receive a desirable channel and the corresponding program is being viewed (step S2). At first, the receiving apparatus 1 extracts the all stations SI from the TS of the channel, which is currently received, and obtains the date and time data included in this all stations SI (step S4). In the present system, the management of the date and time data is performed on the broadcasting station side, which transmits the broadcasting wave, and the present date and time data is included in the all stations SI. Thus, the receiving apparatus 1 obtains the date and time data out of the received wave. Next, the receiving apparatus 1 calculates the day-of-week of today i.e., the day of currently viewing the program, from the obtained date and time data (step S6). Normally, since the day-of-week information is not included in the date and time data from the satellite, the day-of-week is determined from the date and time data by using a predetermined calendar calculation.

Then, the EPG display data for 8 days from today i.e., the day of currently viewing the program is obtained as the data for the day-of-week cells of the day-of-week EPG, on the basis of the date and time data and the day-of-week data determined in the above mentioned manner (step S8). As described before, the EPG text data are stored in the RAM 16, which have been made of the all stations SI as the source. Thus, the CPU 17 obtains the corresponding data within the RAM 16, and combines it with the font data within the ROM 15 and the graphic data within the flash memory 14, to thereby constitute the EPG display data and store it into the working memory. The EPG display data constituted in this manner schematically becomes as the image shown in FIG. 4.

Next, it is judged whether or not the EPG key 46 or the day-of-week key 48 (refer to FIG. 5) is pressed by the user (step S10). If it is not pressed (step S10: NO), since the instruction to display the EPG is not given, it is continued to display the program viewing picture plane. On the other hand, if it is pressed (step S10: YES), the day-of-week of viewing in the day-of-week EPG to be displayed is set to today, so that the day-of-week tab 34 for "today" is set into the selected condition (step S12, refer to FIG. 3). Next, the receiving apparatus 1 sets the time axis of the day-of-week EPG to be displayed (step S14). This is done by setting the time of the display lead shown in the time band display area 29 to the lead of the unit time, in which the present time is included. Namely, if the present time is X hour Y minute, the time of the display lead is set to X hour 0 minute. For example, since the present time is PM 07:10 in the example of FIG. 3, the time band display area 29 is set such that the time of the display lead is PM 07:00.

Next, the receiving apparatus 1 sets the channel axis of the day-of-week EPG to be displayed (step S16). Namely, the receiving apparatus 1 maintains the channel axis, which has been viewed at the time when the user presses the EPG key 46 or the day-of-week key 48. Then, the receiving apparatus 1 determines the range to be displayed as the program table (step S18). For example, if the size of the program table, which can be simultaneously displayed, is set to "m hours" in the time axis direction and the "n channels" in the channel axis direction by the setting of the receiving apparatus 1, the display range is determined as corresponding to the m hours from the display lead time set at the step S14 and corresponding to the m channels from the display lead channel set at the set S16. Then, the EPG data corresponding to this determined display range is obtained.

Next, by using the EPG display data obtained in this manner, the CPU 17 and the display processor 9 constitute the program table today, to thereby display it on the TV display (step S20). At this time, the cursor is positioned on the program, which was viewed immediately before. Accordingly, the program table as shown in FIG. 3 is displayed. The user performs various operations while inspecting this program table (step S22).

Next, the receiving apparatus 1 judges whether or not the instruction to enter the genre skip mode is inputted by the user (step S24). If this instruction is inputted (step S24: YES), the operational flow proceeds to the genre skip mode (step S26).

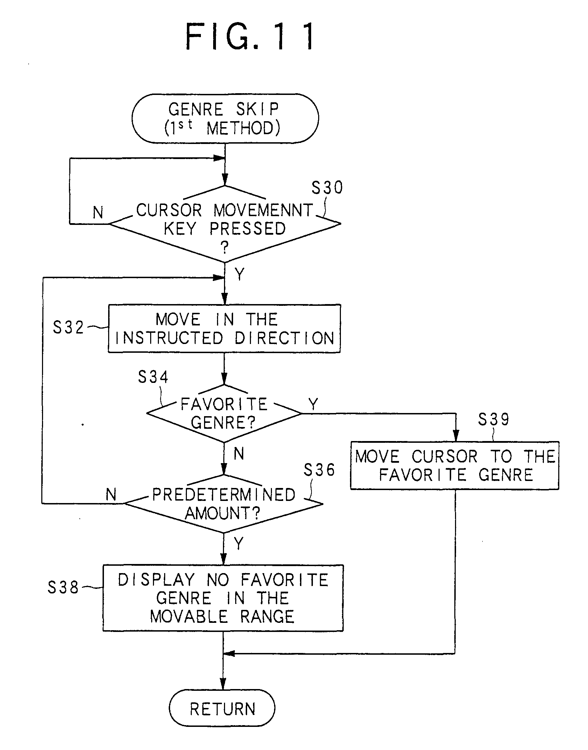

FIG. 11 shows the flowchart of the genre skip mode, which corresponds to the aforementioned first method of the genre skip mode to display the EPG picture plane. At first, it is judged whether or not the user presses the cursor movement key (step S30). If it is not pressed (step S30: NO), the inputting operation by the user is waited for. If the input of the cursor movement key is detected (step S30: YES), the cursor 33 is moved by one unit in the instructed direction (step S32). Here, one unit may be one channel in case of moving in the channel axis direction, or one program cell in case of moving in the time axis direction. This cursor moving process is actually performed as the CPU 17 moves the cursor position on data, so that the actual movement of the cursor on the EPG picture plane on the TV display is executed later.

Next, the CPU 17 judges whether or not the program cell of the cursor movement destination belongs to the favorite genre (step S34). If it is the program cell of the favorite genre (step S 34: YES), the program cell after the cursor movement is set as the newly and currently selected program cell. Then, the EPG picture plane is updated (step S39), and the process is ended. On the other hand, if it is not the program cell of the favorite genre (step S34: NO), it is judged whether or not the cursor moving process has been performed for the predetermined amount (step S36). This is the process of judging whether or not the cursor moving amount exceeds the aforementioned cursor movable range. For example, the predetermined amount may be 10 channels or 10 hours in the foregoing example. If it does not exceed the predetermined amount (step S36: NO), the operational flow returns to the step S32, and the movement of the cursor is repeated. In this way, when the cursor moving amount reaches the predetermined amount, it is judged that there does not exist the program of the favorite genre within the cursor movable range. Thus, if necessary, the aforementioned message indicating that no program of the favorite genre exists in the cursor movable range is displayed (step S38), and the process is ended.

When the genre skip mode shown in FIG. 11 is ended, the operational flow returns to the main routine of FIG. 10, so that the inputting operation by the user is waited for.

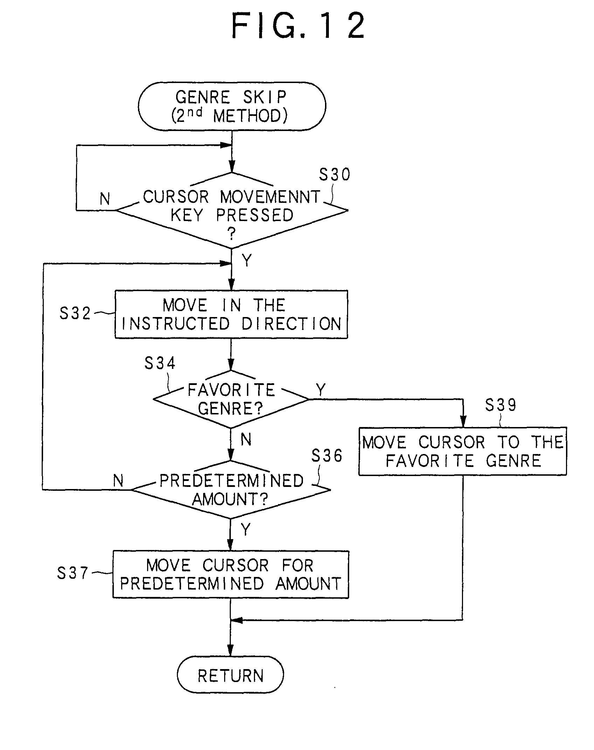

Next, the second method of the genre skip mode to display the EPG picture plane is explained with reference to FIG. 12. In the second processing method, the steps other than the step S37 are the same as those of the first method of FIG. 11. Namely, after it is judged whether or not the cursor movement has been performed for the predetermined amount at the step S36, if it has been performed (step S36: YES), the cursor is moved in the predetermined amount (e.g., 10 channels or 10 hours in the foregoing example (step S37), and the process is ended.

As described above, according to the present embodiment, since the programs other than the program or programs of the user's favorite genre set in advance by the user are displayed in the subtle color in the genre skip mode and are not the targets of the cursor movement, it is possible for the user to speedily find out the program of the favorite genre. Further, since the moving amount of the cursor is limited in the genre skip mode, it is possible to prevent the user from being confused by the large movement of the cursor.

## Claims

1. A program guide displaying apparatus (1) for displaying a program table, in which a plurality of program information are displayed in a 2-dimension of a time axis and a channel axis, characterized in that said apparatus comprises:
a program information obtaining device (3 to 7) for obtaining the program information including information indicative of a program name, a genre name, a start time, a length of a program or an end time, a broadcasting channel and a broadcasting date of respective one of a plurality of programs;
a genre specifying device (12, 13, 17) for specifying a genre among a plurality of genres;
a. displaying device (8, 9, 200) for displaying the program table such that the programs belonging to the specified genre are displayed in a first display manner, the programs other than the programs belonging to the specified genre are displayed in a second display manner different from the first display manner, and one program is indicated as a selected program among the programs belonging to the specified genre on the basis of the obtained program information; and
a movement specifying device (12, 13, 17) for specifying a movement of the selected program in a time axis direction along the time axis or in a channel axis direction along the channel axis, on the displayed program table, wherein
said displaying device indicates another program, which is the closest to the one program in the time axis direction on the displayed program table, as the selected program among the programs belonging to the specified genre and belonging to a channel same as that of the one program if the movement in the time axis direction is specified by said movement specifying device, and
said displaying device indicates another program, which is the closest to the one program in the channel axis direction on the displayed program table, as the selected program among the programs belonging to the specified genre, belonging to a channel different from that of the one program and having a predetermined time relationship with the one program if the movement in the channel axis direction is specified by said movement specifying device.

2. A program guide displaying apparatus (1) according to claim 1, characterized in that the programs on the program table displayed by the second display manner are less visible than those by the first display manner.

3. A program guide displaying apparatus (1) according to claim 1 or 2, characterized in that said displaying device (8, 9, 200) displays a cursor on the selected program.

4. A program guide displaying apparatus (1) according to any one of claims 1 to 3, characterized in that said displaying device (8, 9, 200) changes a position of the selected program only within a predetermined movable range in the channel axis direction and the time axis direction.

5. A program guide displaying apparatus (1) according to claim 4, characterized in that, if there does not exist another program as the selected program within the predetermined movable range, said displaying device (8, 9, 200) continues to display the one program as the selected program.

6. A program guide displaying apparatus (1) according to claim 4, characterized in that, if there does not exist another program as the selected program within the predetermined movable range, said displaying device (8, 9, 200) displays a message indicating that there does not exist another program within the predetermined movable range.

7. A program guide displaying apparatus (1) according to claim 4, characterized in that, if there does not exist another program as the selected program within the predetermined movable range, said displaying device (8, 9, 200) displays another program which is located at an edge of the predetermined movable range.

8. A program guide displaying method of displaying a program table, in which a plurality of program information are displayed in a 2-dimension of a time axis and a channel axis, characterized in that said method comprises:
a program information obtaining process of obtaining the program information including information indicative of a program name, a genre name, a start time, a length of a program or an end time, a broadcasting channel and a broadcasting date of respective one of a plurality of programs;
a genre specifying process of specifying a genre among a plurality of genres;
a displaying process of displaying the program table such that the programs belonging to the specified genre are displayed in a first display manner, the programs other than the programs belonging to the specified genre are displayed in a second display manner different from the first display manner, and one program is displayed as a selected program among the programs belonging to the specified genre on the basis of the obtained program information; and
a movement specifying process of specifying a movement of the selected program in a time axis direction along the time axis or in a channel axis direction along the channel axis, on the displayed program table, wherein
said displaying process displays another program, which is the closest to the one program in the time axis direction on the displayed program table, as the selected program among the programs belonging to the specified genre and belonging to a channel same as that of the one program if the movement in the time axis direction is specified by said movement specifying process, and
said displaying process displays another program, which is the closest to the one program in the channel axis direction on the displayed program table, as the selected program among the programs belonging to the specified genre, belonging to a channel different from that of the one program and having a predetermined time relationship with the one program if the movement in the channel axis direction is specified by said movement specifying process.

9. A program guide displaying method according to claim 8, characterized in that the programs on the program table displayed by the second display manner are less visible that those by the first display manner.

10. A program guide displaying method according to claim 8 or 9, characterized in that said displaying process displays a cursor on the selected program.

11. A program guide displaying method according to any one of claims 8 to 10, characterized in that said displaying process changes a position of the selected program only within a predetermined movable range in the channel axis direction and the time axis direction.

12. A program guide displaying method according to claim 11,
characterized in that, if there does not exist another program as the selected program within the predetermined movable range, said displaying process continues to display the one program as the selected program.

13. A program guide displaying method according to claim 11, characterized in that, if there does not exist another program as the selected program within the predetermined movable range, said displaying process displays a message indicating that there does not exist another program within the predetermined movable range.

14. A program guide displaying method according to claim 11, characterized in that, if there does not exist another program as the selected program within the predetermined movable range, said displaying process displays another program which is located at an edge of the predetermined movable range.
